# EUROPEAN PATENT APPLICATION

(11) **EP 4 174 403 A1**
(43) Date of publication of application: **03.05.2023**
(21) Application number: 21204849.0
(22) Date of filing: 26.10.2021
(51) Int. Cl.: F25B 13/00, F25B 41/26, F16K 11/00

(54) **FOUR-WAY VALVE FOR A HEAT-PUMP ARRANGEMENT AND HEAT-PUMP ARRANGEMENT**

(71) Applicant: Danfoss A/S, 6430 Nordborg (DK)
(72) Inventor: Van Beek, Johan, 6430 Nordborg (DK)
(74) Representative: Patentanwälte Olbricht Buchhold Keulertz

(57) **Abstract**

The present invention pertains to a four-way valve for a heat-pump arrangement. The valve comprises a housing with four fluid connection ports, a rotatable valve element for switching the connections between the fluid connection ports, an actuator for rotating the valve element and sensor components on a low pressure side and a high pressure side of the valve for measuring properties of the fluid inside the housing. The invention is also directed at a heat-pump arrangement comprising a corresponding four-way valve.

## Description

The present invention pertains to a four-way valve for a heat-pump arrangement. The valve comprises a housing with four fluid connection ports, a rotatable valve element for switching the connections between the fluid connection ports, an actuator for rotating the valve element and sensor components on a low pressure side and a high pressure side of the valve for measuring properties of the fluid inside the housing. The invention is also directed at a heat-pump arrangement comprising a corresponding four-way valve.

Four-way valves are known to be used with heat-pump arrangements. The valves provide means for operating the heat-pump arrangements in a bidirectional manner, i.e. as a cooling or a heating device. The heat-pump arrangements may require a number of different sensors and actuators.

A problem arising with the known valves is that the various components of the heat-pump arrangement and the positioning of said components may complicate the assembly, maintenance and replacement of the heat-pump arrangement or said components.

The aim of the present invention is to overcome this problem by providing an improved four-way valve and an improved heat-pump comprising a corresponding four-way valve arrangement. This aim is achieved by a four-way valve according to claim 1 and a heat-pump arrangement according to claim 10 and comprising a corresponding four-way valve. Preferable embodiments of the invention are subject to the dependent claims.

According to claim 1, a four-way valve for a heat-pump arrangement is provided. The valve comprises a housing with four fluid connection ports. The fluid connection ports may be arranged in parallel to each other. A rotatable valve element is provided for switching the connections between the fluid connection ports. The connections ports may comprise two inlet and two outlet ports. In one position of the rotatable valve element, a first inlet may be connect to a first outlet port and a second inlet may be connect to a second outlet port. In another position of the rotatable valve element, the first inlet may be connect to the second outlet port and the second inlet may be connect to the first outlet port.

The valve element may be provided inside a central portion of the housing. An actuator is provided for rotating the valve element. The valve further comprises sensor components on a low pressure side and a high pressure side of the valve for measuring properties of the fluid inside the housing. The low and high pressure sides of the valve correspond to portions of the valve at which low and high pressure fluids, respectively, are present during operation of the valve.

The valve combines all or almost all peripheral devices, such as actuators and sensors, required for controlling the fluid flow across the valve during its operation. The valve may be provided in a ready to assemble state by the manufacturer, in which all or almost all of its peripheral devices are in place and ready to be connected or already connected with some control mean, such that the required in-situ assembly steps are minimized.

In a preferred embodiment of the invention, the housing is formed integrally and/or extruded and/or pressure die cast and/or made of aluminium or an aluminium alloy and/or the housing is provided with filling valves, in particular Schrader valves. Providing an integrally formed and, in particular, extruded housing reduces the manufacturing costs of the housing and therefore of the entire valve.

In another preferred embodiment of the invention, the housing comprises three partially separated portions, wherein a central portion comprises two central fluid connection ports and two lateral portions comprise one lateral fluid connection port each. The central portion may house the rotatable valve element. The two lateral portions may be at least partially symmetrical to each other. The two lateral portions may be positioned at opposite sides of the central portion.

In a particularly preferred embodiment of the invention, the lateral fluid connection ports are arranged opposite the sensor components, in particular in an axial direction of the valve. The valve may be designed such that fluid connection components such as the ports and/or conduits are arranged separated from and in particular opposite to electric components such as the sensors and/or actuators.

In another particularly preferred embodiment of the invention, the partially separated portions are separated by grooves, in particular milled or stamped grooves. The grooves may reduce undesired heat transfer between the partially separated portions, thereby increasing the thermal efficiency of the valve. The term grooves may be understood in a broad sense. The corresponding feature may be a recess, an indentation or any other geometrical feature capable of reducing the heat transfers between the partially separated portions. The groove may be machined or formed in any other convenient way.

In another preferred embodiment of the invention, the fluid connection ports are arranged at a side of the housing opposite the actuator. The actuator and at least some of the fluid connection ports may be arranged such that their central axes are parallel to each other and/or coplanar. Two central fluid connection ports may be arranged directly opposite the actuator, whereas two lateral fluid connection ports may be arranged further radially outward of the central axis of the actuator.

In another preferred embodiment of the invention, the sensor components are P&T transmitters and/or the filling valves are Schrader valves and/or the rotatable valve element is injection moulded and/or made of steel, aluminium, an aluminium alloy or a ceramic material and/or that the four-way valve further comprises an expansion component and/or a pressure switch. The P&T transmitters may be combined transmitters for measuring pressure and temperature.

In another preferred embodiment of the invention, at least one redundant seal is provided between the housing and at least one of a connector, the actuator, the sensor components and/or the filling valves. The seal may be a metal seal and/or it may comprise glue or other synthetic materials. The seal may comprise a knife edge seal portion. A redundant seal improves the longevity of the valve and reduces the risk of leakages at the ports and openings of the housing of the valve.

In another preferred embodiment of the invention, the housing comprises tapped blind holes for connecting conduits to the fluid connection ports. The housing may be therefore adapted for not only providing access to its inside for sensors and actuators, but also for attaching conduits in a cost-efficient and durable manner.

The invention is also directed at a heat-pump arrangement comprising a corresponding four-way valve and a compressor. The four-way valve and the compressor are connected such that a fluid conduit portion closest to the actuator is fluidly connected to the suction port of the compressor, in particular in all positions of the rotatable valve element.

Further details and advantages of the invention are described with reference to the figures. The figures show:
- Figure 1:: a perspective view of one side of the four-way valve;
- Figure 2:: a perspective view of an opposite side of the four-way valve;
- Figure 3:: a section view of the four-way valve;
- Figure 4:: a side view of the four-way valve with an expansion component; and
- Figs. 5a-5c:: different views of the seals of the four-way valve.

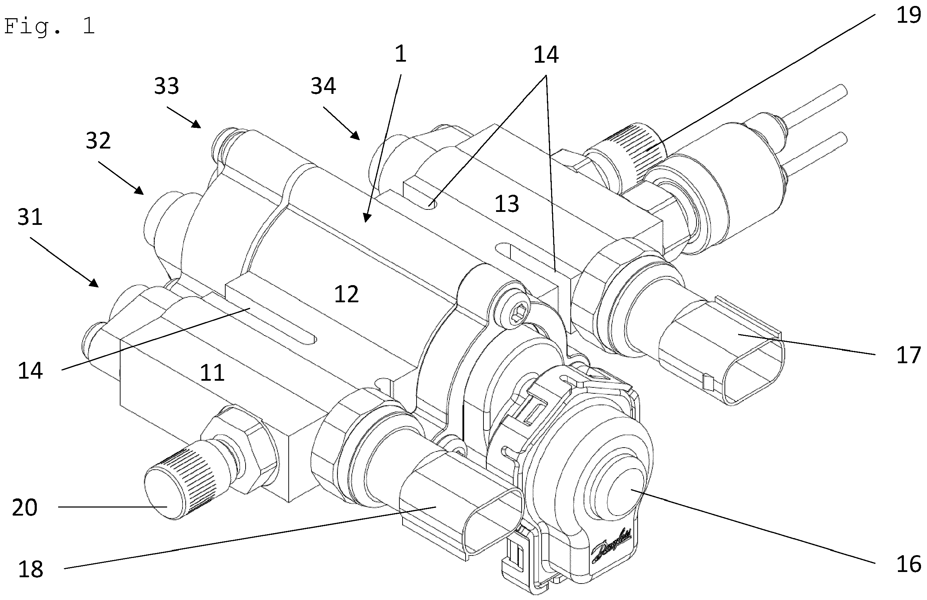

Figure 1 is a perspective view of one side of an embodiment of the presently described four-way valve. The four-way valve is provided for a heat-pump arrangement, such that it controls a heat exchanger fluid flow between a compressor and a heat exchanger. The valve comprises a housing 1 with four fluid connection ports 31, 32, 33, 34. The fluid connection ports 31, 32, 33, 34 are only indicated by the reference numbers and the corresponding arrows, they are not visible in figure 1.

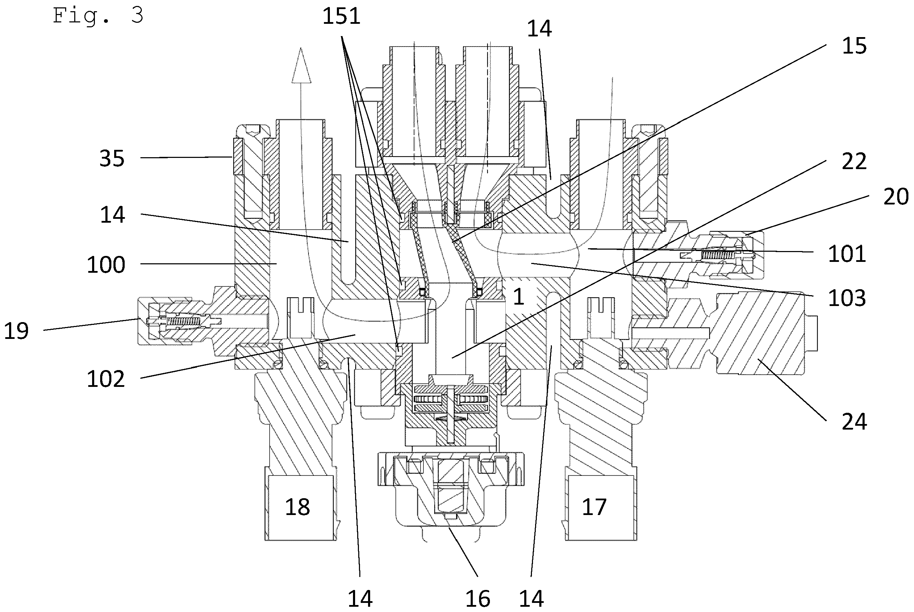

A rotatable valve element 15, which is shown in figure 3, for switching the connections between the fluid connection ports 31, 32, 33, 34 is provided inside the housing 1. An actuator 16 for rotating the valve element 15 is provided at one of the axial ends of said valve element 15. Sensor components 17, 18 on a low pressure side and a high pressure side of the valve are provided for measuring properties of the fluid inside the housing 1.

In an alternative embodiment, the four-way valve comprises a housing 1 with four fluid connection ports 31, 32, 33, 34, a rotatable valve element 15 for switching the connections between the fluid connection ports 31, 32, 33, 34, an actuator 16 for rotating the valve element 15 and sensor components 17, 18 for measuring properties of the fluid inside the housing 1. In this embodiment, the housing 1 is an extruded component.

At least one of the sensor components 17, 18 may be arranged in parallel or coaxially to at least some of the fluid connection ports 31, 32, 33, 34. Alternatively or additionally, at least one of the sensor components 17, 18 may be arranged at least partially in a feedthrough extending along an axial direction of the housing 1. The axial direction of the housing 1 may be parallel to the axial direction of at least one of the fluid connection ports 31, 32, 33, 34. The fluid connection ports 31, 32, 33, 34 may be arranged in parallel and next to each other. The fluid connection ports 31, 32, 33, 34 may be arranged next to each other in a direction, which is perpendicular to the axial direction of the housing 1.

In order to facilitate the manufacture of the housing 1, the housing 1 may be formed integrally. Possible manufacturing methods comprise extrusion and/or pressure die casting. The chosen manufacturing method makes it possible to produce conduits, openings and/or other features of the housing 1 simultaneously, thereby facilitating its manufacture.

Any suitable metal or metal alloy such as aluminium or an aluminium alloy may be used for manufacturing the housing 1. The housing may be provided with filling valves 19, 20, in particular Schrader valves for filling the heat pump arrangement with a working fluid or emptying the heat pump arrangement.

The housing 1 may comprise three partially separated portions 11, 12, 13, wherein a central portion 12 comprises two central fluid connection ports 32, 33 and two lateral portions 11, 13 comprise one lateral fluid connection port 31, 34 each.

The three partially separated portions 11, 12, 13 may be arranged co-planar with respect to each other and/or in a width direction of the housing 1, perpendicular to the axial direction of the housing 1. The expression "partially separated" may be understood in a broad sense and may refer to portions which are simply spaced apart from each other. They may be separated from each other in the sense that the distance between them reduces the thermal flux between the three portions.

Alternatively or additionally, the three partially separated portions 11, 12, 13 of the housing 1 extend over the same distance in the axial direction of the housing 1. Each of the three partially separated portions 11, 12, 13 may extend over the entire length of the housing 1 in the axial direction thereof. Thus, the housing 1 may be bound by two opposing faces, in particular parallel faces.

The central portion 12 of the three partially separated portions 11, 12, 13 may be larger than the two lateral portions 11, 13. The central portion 12 may comprise some cylindrical and/or convex sub-portions extending in an axial and a height direction of the housing 1. The central portion 12 may extend furthest in a height direction of the housing 1. The height direction may be perpendicular to both, the axial or length direction and the width direction.

In the embodiment of figure 1, the lateral fluid connection ports 31, 34 are arranged opposite the sensor components 17, 18. The lateral fluid connection ports 31, 34 may be arranged coaxially or, more broadly speaking, in parallel to the sensor components 17, 18. The sensor components 17, 18 may be at least partially inserted into fluid conduits 100, 101, shown in figure 3, within the housing 1 and leading to the fluid connection ports 31, 34. The sensor components 17, 18 may be P&T transmitters, which preferably may also be arranged in the axial direction of the housing 1.

The partially separated portions 11, 12, 13 may be separated by grooves 14, in particular milled or stamped grooves 14. There may be two grooves 14 between each neighbouring separated portion 11, 12, 13. Two opposing grooves 14 may, in total, extend over more than half of the axial length of the housing 1. The grooves 14 may extend in the axial direction of the housing 1.

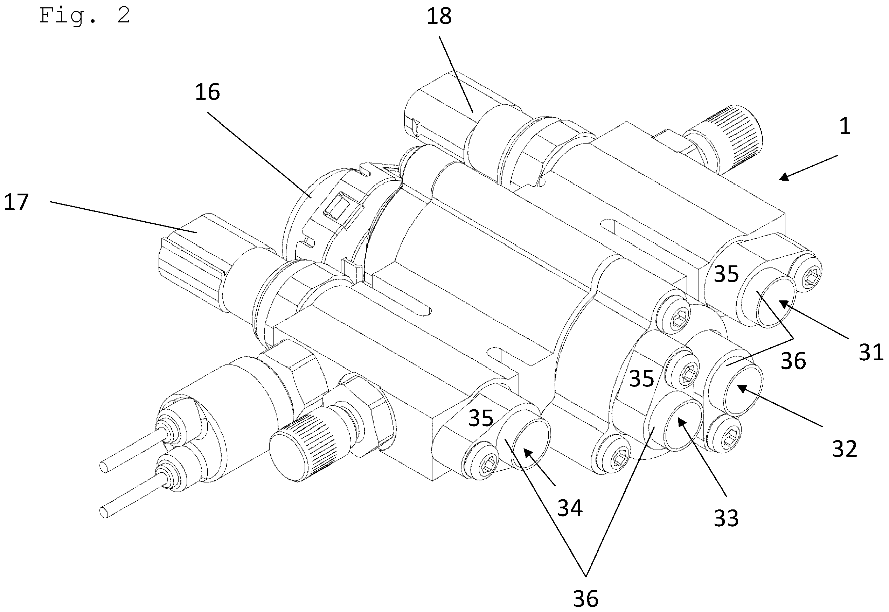

Figure 2 is a perspective view of an opposite side of the four-way valve. The actuator 16 is shown on the left side of the housing 1 and the fluid connection ports 31, 32, 33, 34 are positioned on the opposite, right side of the housing 1. The direction of the arrangement of the actuator 16 with respect to the fluid connection ports 31, 32, 33, 34 may also define the axial direction of the housing 1.

The housing 1 may comprise tapped blind holes for connecting conduits to the fluid connection ports 31, 32, 33, 34. The fluid connection ports 31, 32, 33, 34 may be inside the housing 1 and are only indicated by the arrows and the corresponding reference numbers. The blind holes and the conduits are not visible in figure 2. The conduits may be connected to the housing 1 via connectors 35, which may be screwed into the blind holes. Each connector 35 may be attached to the housing 1 by one screw. The connectors 35 may comprise a cylindrical portion for connecting a conduit and one hole for inserting a screw and screwing the connector 35 to the housing 1. The connectors 35 may be at least partially inserted into the fluid connection ports 31, 32, 33, 34.

Figure 3 is a section view of the four-way valve. Inside the housing 1, the rotatable valve element 15 is shown with two different pressure fluids streaming therethrough, indicated by arrows. The rotatable valve element 15 may be rotated by the actuator 16 for changing the direction of the fluid flow. The rotatable valve element 15 may be injection moulded and/or made of steel, aluminium, an aluminium alloy or a ceramic material. The axis of rotation of the rotatable valve element 15 may be parallel to the axis of axial conduits 100, 101 inside the housing 1.

The connectors 35 are screwed into tapped blind holes of the housing 1. The connectors 35 are provided for holding conduits. The valve may comprise any number of connectors 35. In the presently described embodiment, four connectors 35 are shown. However, reference numbers are not given for all connectors 35 for clarity's sake.

The axial conduits 100, 101 are shown extending in an axial direction of the housing. The axial conduits 100, 101 are fluidly connected to the rotatable valve element 15 via connection conduits 102, 103. Axial conduits 100, 101 may be oriented perpendicular to the connection conduits 102, 103.

The rotatable valve element 15 may be provided between the connection conduits 102, 103. The filling valves 19, 20 may be aligned coaxially with the connection conduits 102, 103. Thus, the connection conduits 102, 103 may be drilled at the same manufacturing step as openings for the filling valves 19, 20. The connection conduits 102, 103 may be offset with respect to each other in the axial direction of the housing 1.

The rotatable valve element 15 may comprise at least three sealing portions 151, which seal the rotatable valve element 15 against the housing 1. One of the sealing portions 151 may be arranged between the two connection conduits 102, 103 in the axial direction of the housing 1. The other two sealing portions 151 may be arranged on outlying positions with respect to the connection conduits 102, 103 and in the axial direction of the housing 1.

The presently described four-way valve may be part of a heat-pump arrangement comprising a compressor and further components not shown in the figures. The four-way valve and the compressor may be connected such that a fluid conduit portion 22 closest to the actuator 16 is fluidly connected to the suction port of the compressor. This connection ensures that low temperature fluid is present close to the actuator 16, thereby reducing the risk of high temperature related damage to the actuator. The fluid conduit portion 22 may be situated between the two connection conduits 102, 103 on the one side and the actuator 16 on the other side. The fluid conduit portion 22 may comprise an internal part of the rotatable valve element 15.

The rotatable valve element 15 may be connected mechanically to the actuator 16 via a gear arrangement. Some or all of the external or partially external components or portions of the valve, such as the actuator 16, the fluid connection ports 31, 32, 33, 34, the connectors 35, the sensor components 17, 18, the filling valves 19, 20 and/or a pressure switch 24 may be arranged planar with respect to each other. The mentioned components or portions may be all or partially oriented away from the housing 1, in particular in a perpendicular direction with respect to the housing 1 or the portion of the housing 1, to which the components are attached.

The housing 1 may also comprise an opening for attaching the pressure switch 24. The pressure switch 24 may be arranged in parallel to at least one of the filling valves 19, 20. The pressure switch 24 may be arranged between one of the sensor components 17, 18 and one of the filling valves 19, 20.

The housing 1 may comprise three major feedthroughs extending along the entire length of the housing 1 in an axial direction thereof. The two connection conduits 102, 103 may be arranged at an angle to the feedthroughs, in particular at a perpendicular angle. The major feedthroughs may be extruded together with the remainder of the housing 1, while the two connection conduits 102, 103 may be formed, in particular drilled, during another manufacturing step of the housing 1.

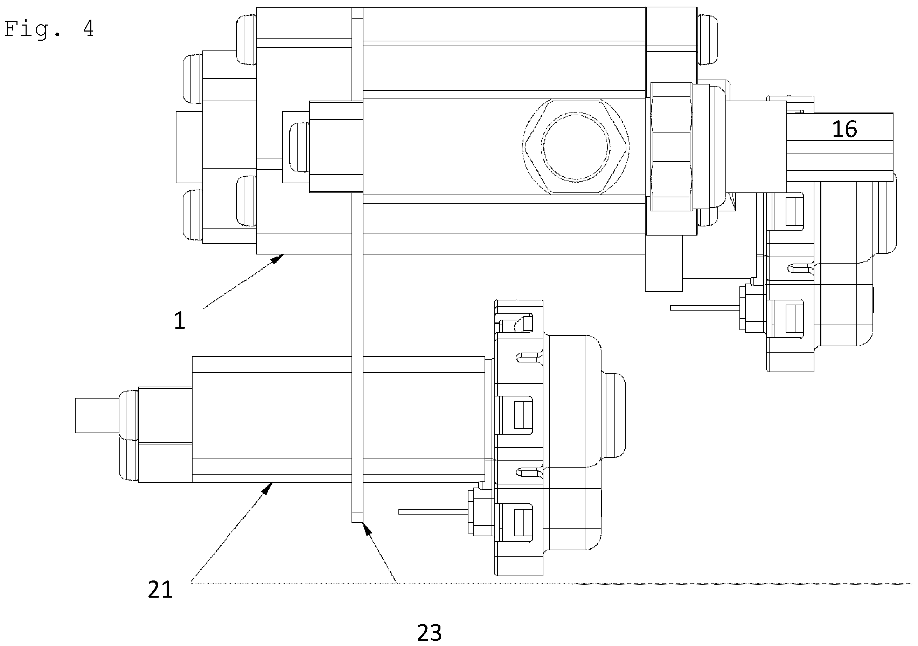

Figure 4 is a side view of the four-way valve with an expansion component 21. The expansion component 21 is used for expanding the compressed fluid flowing through the valve. Corresponding fluid connections have to be established between the housing 1 and the expansion component 21 but are not shown in figure 4. The expansion component 21 may be mounted to the housing 1 via a mounting bracket 23. The expansion component 21 may be oriented in the same way as the housing 1, such that the fluid connection ports of the housing 1 and the expansion component 21 point in one direction, i.e. left in figure 4, and at least some other connections such as electric connections of i.e. the actuator 16 point in the opposite direction.

In an embodiment not shown in the figures, the four-way valve may comprise the actuator 16, the sensor components 17, 18 and/or further electronic components such that they are provided as one sub-component, in particular with a common sub-housing and/or with a flexible printed circuit board for connecting said electronic components.

This combined sub-component further facilitates the assembly and repair of the valve, as electronic components may simply be completely or nearly completely assembled or replaced by assembling or replacing the corresponding sub-component.

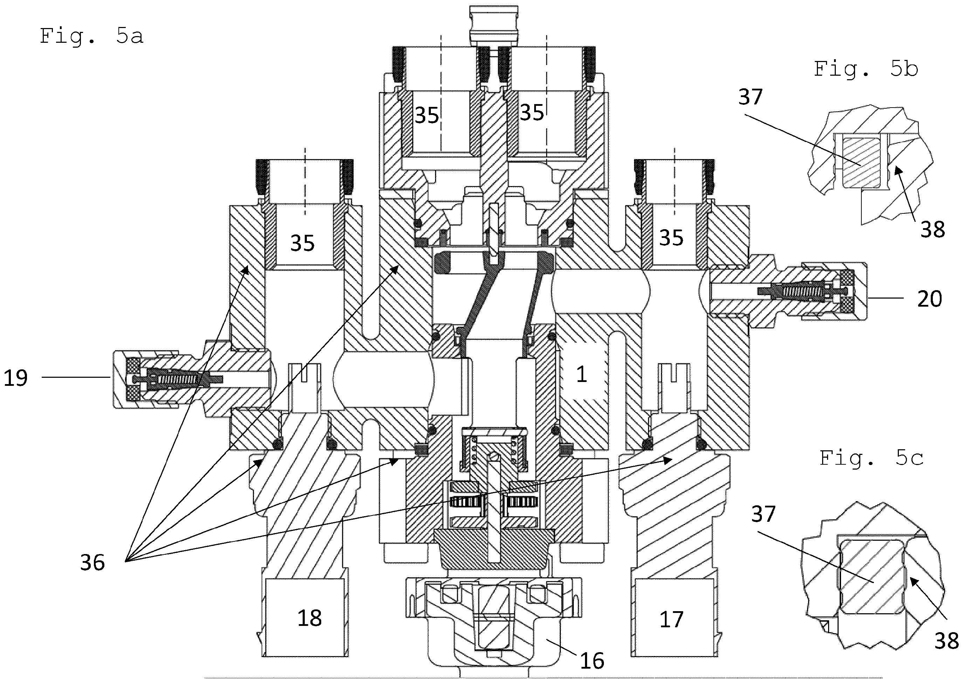

Figures 5a to 5c show different views of the seals of the four-way valve. Several redundant seals 36 may be provided at various positions of the valve. In particular, the redundant seals 36 may be provided between the housing 1 and other components of the valve. For example, a redundant seal 36 may be provided between the housing 1 and one or more of the connectors 35. Although only some of the redundant seals 36 are indicated, said redundant seals 36 may be used at any suitable position within the valve.

A redundant seal 36 may comprise two or more separate seal components, such as a rubber seal, a metal seal and/or a glued portion between two components.

The redundant seal 36 may be provided between, on the one side, the housing 1 and, on the other side, the actuator 16, the sensor components 17, 18 and/or the filling valves 19, 20. The seal may be a metal seal and/or it may comprise glue or other synthetic materials.

Figures 5b and 5c show a metal seal, i.e. metal seal components comprising a knife edge portion. In figure 5a, a ring-shaped metal seal component, such as an annealed aluminium ring 37 is shown prior to the connection of two components of the valve. The two components of the valve are shown to comprise knife edge features 38, which are inserted into the aluminium ring 37 upon connection of the two components.

Figure 5c shows the situation, in which the two components of the valve are connected and the knife edge features 38 are inserted into the aluminium ring 37. The insertion of the knife edge features 38 into the aluminium ring 37 ensures a sealing and gastight connection between the two components of the valve.

## Claims

1. Four-way valve for a heat-pump arrangement, comprising a housing (1) with four fluid connection ports (31, 32, 33, 34), a rotatable valve element (15) for switching the connections between the fluid connection ports (31, 32, 33, 34), an actuator (16) for rotating the valve element (15) and sensor components (17, 18) on a low pressure side and a high pressure side of the valve for measuring properties of the fluid inside the housing (1).

2. Four-way valve according to claim 1, **characterized in that** the housing (1) is formed integrally and/or extruded and/or pressure die cast and/or made of aluminium or an aluminium alloy and/or that the housing (1) is provided with filling valves (19, 20), in particular Schrader valves.

3. Four-way valve according to any of the previous claims, **characterized in that** the housing (1) comprises three partially separated portions (11, 12, 13), wherein a central portion (12) comprises two central fluid connection ports (32, 33) and two lateral portions (11, 13) comprise one lateral fluid connection port (31, 34) each.

4. Four-way valve according to claim 3, **characterized in that** the lateral fluid connection ports (31, 34) are arranged opposite the sensor components (17, 18).

5. Four-way valve according to at least claim 3, **characterized in that** the partially separated portions (11, 12, 13) are separated by grooves (14), in particular milled or stamped grooves (14).

6. Four-way valve according to any of the previous claims, **characterized in that** the fluid connection ports (31, 32, 33, 34) are arranged at a side of the housing (1) opposite the actuator (16).

7. Four-way valve according to any of the previous claims, **characterized in that** the sensor components (17, 18) are P&T transmitters and/or that the filling valves (19, 20) are Schrader valves and/or that the rotatable valve element (15) is injection moulded and/or made of steel, aluminium, an aluminium alloy or a ceramic material and/or that the four-way valve further comprises an expansion component (21) and/or a pressure switch.

8. Four-way valve according to at least claim 2, **characterized in that** at least one redundant seal (36) is provided between the housing (1) and at least one of a connector (35), the actuator (16), the sensor components (17, 18) and/or the filling valves (19, 20).

9. Four-way valve according to any of the previous claims, **characterized in that** the housing (1) comprises tapped blind holes for connecting conduits to the fluid connection ports (31, 32, 33, 34).

10. Heat-pump arrangement comprising a four-way valve according to any of the previous claims and a compressor, **characterized in that** the four-way valve and the compressor are connected such that a fluid conduit portion (22) closest to the actuator (16) is fluidly connected to the suction port of the compressor.
